# EUROPÄISCHE PATENTSCHRIFT

(11) **EP 0 794 340 B1**
(45) Veröffentlichungstag und Bekanntmachung des Hinweises auf die Patenterteilung: **17.11.1999**
(21) Anmeldenummer: 97102631.5
(22) Anmeldetag: 19.02.1997
(51) Int. Cl.: F16C 13/02, C23C 2/00, F16C 19/12

(54) **Lagerung von Rollen**
Bearing for rolls
Palier pour rouleaux

(30) Priorität: 06.03.1996 DE 19608670
(43) Veröffentlichungstag der Anmeldung: 10.09.1997
(73) Patentinhaber: SKF GmbH, 97421 Schweinfurt (DE); Thyssen Stahl Aktiengesellschaft, 47166 Duisburg (DE)
(72) Erfinder: Biendara, Dieter, 57413 Finnentrop (DE); Braszus, Dieter, 97464 Niederwerrn (DE); Heeg, Thoralf, 57439 Attendorn (DE); Heiler, Hans-Joachim, 47447 Moers-Vinn (DE); Kaschube, Karl-Friedrich, 97464 Niederwerrn (DE); Obolenski, Boris, 45133 Enen (DE); Winter, Heinrich, 97422 Schweinfurt (DE)
(74) Vertreter: Gosdin, Michael, Dr.

(56) Entgegenhaltungen:
- DE-A- 4 207 034
- DE-A- 4 307 282
- DE-U- 9 301 764
- FR-A- 531 074
- PATENT ABSTRACTS OF JAPAN vol. 96, no. 6, 28.Juni 1996 & JP 08 042566 A (KOYO SEIKO), 13.Februar 1996,

## Beschreibung

Durch das DE 93 01 764 ist es bereits bekannt, ein Kugellager mit Laufringen aus hitzebeständigem Stahl und Keramikkugeln für die Lagerung von Umlenkrollen in geschmolzenem Metall zu verwenden. Bei solchen Anwendungsfällen ist beispielsweise ein Bottich mit geschmolzenem Zink für die Verzinkung einer durchlaufenden Blechbahn vorgesehen. Diese wird über eine im mehr als 400 Grad Celsius heißen Zinkbad angeordnete Rolle umgeleitet. Sie ist an einem Gestellrahmen aufgehängt und über die genannten Kugellager an den Wellenenden drehbar gelagert. Das aggressive, geschmolzene Zinkbad umspült praktisch das gesamte Lager, da eine zuverlässige Abdichtung bei dieser Temperatur und diesem Medium nicht möglich ist. Dabei ergibt sich ein nicht zu vermeidender Verschleiß insbesondere an den Laufbahnen der Laufringe aus Stahl. Die Verwendung von Keramikwerkstoffen auch für die Laufringe scheidet meist aus, da mit hohen Kosten und insbesondere mit Zerstörung des stark bruchgefährdeten, spröden Keramikwerkstoffes gerechnet werden muß. Aus diesen Gründen bildet die Konstruktion hitzebeständiger Stahllaufringe und Keramikkugeln noch die optimale Lösung. Jedoch steht bei dieser stets der Wunsch nach einer Verlängerung der Lebensdauer im Vordergrund.

Aus der DE-A-42 07 034 sowie der DE-A-43 07 282 sind Lagerungen von Rollen in Schmelzmetallbädern mit temperaturfesten Rollenlagern bekannt, bei denen die Laufbahnen ausschließlich radial belastet werden und im Bereich der Stirnflächen der Rollenzapfen zentrale axiale Abstützelemente angeordnet sind.

Aufgabe der Erfindung ist es, die Lagerung der eingangs genannten Art so zu verbessern, daß im Sinne einer längeren Lebensdauer der Verschleiß insbesondere an den Laufringen reduziert wird.

Die Aufgabe wird gelöst durch Laufringe mit ausschließlich radial belasteten, in der Schmiegung zu den Kugeln reduzierten Laufbahnen und zentralen, im Bereich der Stirnflächen der Rollenzapfen angeordneten, axialen Abstützelementen.

Dadurch wird vorteilhafterweise erreicht, daß der bei Kugellagern mit engerer Schmiegung zwangsläufig auftretende Gleitreibungsanteil stark reduziert wird. Dies wird zwar durch die unzureichende Axialführung an dieser Stelle erkauft, jedoch wird die axiale Führung bei der erfindungsgemäßen Lösung von Abstützelementen im Zentrum der Stirnfläche der Rollenzapfen übernommen. Durch die geringe Schmiegung wird der Verschleiß im Gleitreibungsbereich der Laufbahn des Laufringes erheblich reduziert. Weiterhin können die Kugellager ein größeres axiales Spiel ausgleichen, ohne in den Bereich unerlaubter Axiallasten zu gelangen. Dies ist insbesondere im genannten Anwendungsfall mit großen Abmessungen und Toleranzen der Rolle von Bedeutung.

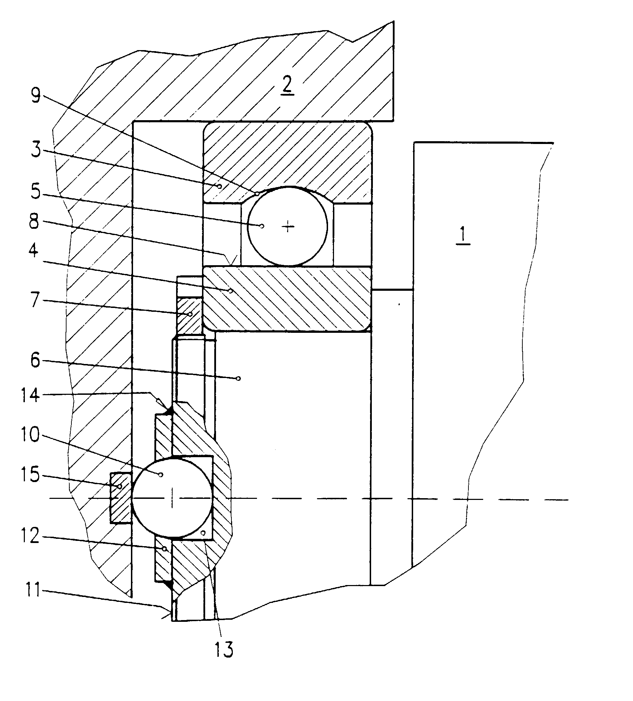

Diese und weitere Merkmale werden nachfolgend an dem in der Zeichnung dargestellten Beispiel beschrieben.

Die einzige Figur zeigt die Lagerung des einen Endes einer Rolle 1 mit einem Kugellager geringer Schmiegung. Die Rolle 1 ist, wie nicht im einzelnen dargestellt, beiderseits gleich gelagert und darüber in einem Tragrahmen 2 drehbar angeordnet. Die gesamte Anordnung arbeitet in einem nicht gezeigten Zinkbad, wobei die Lager mit flüssigem Zink umspült sind.

Das dargestellte Kugellager besteht aus Laufringen 3, 4, hergestellt aus hitzebeständigem Stahl und Kugeln 5 aus Keramik. Der auf dem Rollenzapfen 6 sitzende und mit einer Mutter 7 gesicherte Innenring 4 ist mit einer zylindrischen Laufbahn 8 versehen. Der Außenring 3 sitzt in dem nur angedeuteten Tragrahmen 2 und weist ein gegenüber dem Kugelradius erheblich stärker gekrümmtes Laufbahnprofil 9 auf. Dadurch ergibt sich zur Kugel 5 eine stark reduzierte Schmiegung. Das Kugellager ist deshalb für Axialbelastungen nicht geeignet. Durch diese Konstruktion ist der Gleitreibungsanteil zwischen Kugeln 5 und der Laufbahn 9 des Außenringes 3 erheblich geringer, der am Innenring 4 theoretisch Null.

Die axiale Abstützung erfolgt über Keramikkugeln 10, die beiderseits in die Stirnflächen 11 der Rollenzapfen 6 eingelassen und über eine Deckscheibe 12 mit kleinerer Bohrung 13 geführt und in Position gehalten werden. Die Deckscheibe 12 ist durch Schweißpunkte 14 befestigt. Die Keramikkugel 10 läuft an einer Hartmetallplatte 15 an, die am Tragrahmen 2 befestigt ist. Durch die Lage der Keramikkugel 10 im Zentrum der Drehbewegung der Rolle 1, treten an der punktförmigen Gleitstelle geringe Gleitbewegungen und damit geringer Verschleiß auf

## Patentansprüche

1. Lagerung von Rollen in Schmelzmetallbädern mit temperaturfesten Kugellagern, gekennzeichnet durch Laufringe (3, 4) mit ausschließlich radial belasteten, in der Schmiegung zu den Kugeln (5) reduzierten Laufbahnen (8, 9) und zentralen, im Bereich der Stirnflächen (11) der Rollenzapfen (6) angeordneten, axialen Abstützelementen (10).

2. Lagerung nach Anspruch 1, gekennzeichnet durch eine reduzierte Schmiegung an einem und eine zylindrische Laufbahn (8) am anderen der beiden Laufringe (3, 4).

3. Lagerung nach Anspruch 1 oder 2, gekennzeichnet durch im Drehzentrum angeordnete Keramikkugeln (10).

## Claims

1. Bearing system for rollers operating in molten metal baths and having temperature-resistant ball bearings, characterised by races (3, 4) with exclusively radially loaded tracks (8, 9), whose contact with the balls (5) is less snug und by central axial support elements (10) arranged in the region of the end surfaces (11) of the roller trunnions (6).

2. Bearing system according to Claim 1, characterised by a contact which is less snug on the one and a cylindrical track (8) on the other of the two races (3, 4).

3. Bearing system according to Claim 1 or 2, characterised by ceramic balls (10) arranged at the centre of rotation.

## Revendications

1. Palier pour rouleaux dans des bains de métal en fusion comportant des roulements à billes résistants aux températures élevées, caractérisé par des bagues de roulement (3, 4) avec des chemins de roulement (8, 9) sollicités exclusivement dans la direction radiale et à osculation réduite par rapport aux billes (5) et par des éléments d'appui (10) axiaux, centraux, disposés dans la région des faces frontales (11) des tourillons de rouleaux (6).

2. Palier pour rouleaux selon la revendication 1, caractérisé par une osculation réduite sur l'une des bagues de roulement (3) et un chemin de roulement (8) cylindrique sur l'autre bague de roulement (4).

3. Palier pour rouleaux selon la revendication 1 ou 2, caractérisé par des billes en céramique (10) disposées au centre de rotation.
